# DEMANDE DE BREVET EUROPEEN

(11) **EP 1 104 135 A1**
(43) Date de publication de la demande: **30.05.2001**
(21) Numéro de dépôt: 00403282.7
(22) Date de dépôt: 24.11.2000
(51) Int. Cl.: H04L 12/40, B60R 16/02

(54) **Procédé d'identification et de commande de composants d'un système et dispositif mettant en oeuvre un tel procédé**

(30) Priorité: 25.11.1999 FR 9914962
(71) Demandeur: GIAT INDUSTRIES, 78000 Versailles (FR)
(72) Inventeur: Loison, Jérôme, 18000 Bourges (FR)
(74) Mandataire: Célanie, Christian

(57) **Abrégé**

Le système comprend une unité centrale de commande, un BUS de liaison et des composants. Suivant ce procédé chaque composant se voit attribuer une adresse numérique permettant les échanges de données à travers le BUS entre ledit composant et l'unité centrale ainsi que la commande du composant par l'unité centrale. Le procédé est caractérisé en ce que l'adresse (IF) comprend un premier mot (WF) formé de N bits et permettant de définir ainsi au plus 2^{N} groupes de composants et un deuxième mot (WG) formé de P bits qui permet de définir P composants différents à l'intérieur de chaque groupe, chaque bit de ce deuxième mot correspondant ainsi à un composant particulier du groupe considéré, le deuxième mot (WG) permettant au choix d'identifier dans le groupe considéré un seul ou plusieurs composants.

Application aux systèmes de sécurité automobile.

## Description

Le domaine technique de l'invention est celui des procédés permettant l'identification et la commande de composants, notamment pour un système de sécurité automobile.

Les systèmes permettant de commander des composants à partir d'une unité centrale de commande et au travers d'une liaison filaire tel qu'un BUS de transmission de données sont connus.

Ces systèmes permettent de simplifier le câblage et autorisent une introduction ultérieure de nouveaux composants. Le BUS de transmission de données pourra être un BUS parallèle ou un BUS série comportant deux ou plusieurs fils.

Le brevet EP834813 décrit un tel système de commande appliqué à un dispositif de sécurité pour véhicule automobile.

Afin de permettre à l'unité centrale de commande de reconnaître le composant transmettant une information par le BUS et pour permettre à cette unité centrale de commander de façon fiable un ou plusieurs composants, les messages échangés au travers du BUS utiliseront un protocole d'échange de données dans lequel chaque composant se verra attribuer une adresse unique.

Ainsi un message de commande ou d'information, fourni par un composant ou destiné à un composant, sera toujours accompagné d'un identifiant (ou adresse) permettant de déterminer le composant transmettant l'information ou auquel l'ordre de commande est destiné. Cet identifiant a la forme d'un mot de 2 à 8 bits.

La longueur du mot conditionnera le nombre total de composants qu'il sera possible de disposer dans le système. Ainsi pour un identifiant formé de N bits, le nombre total d'adresses qu'il est possible d'attribuer est de 2^{N}.

Par ailleurs il est parfois utile, notamment dans les systèmes de sécurité automobile, de commander simultanément plusieurs composants. Par exemple pour déclencher tous les coussins de sécurité frontaux ainsi que les prétensionneurs de ceintures de sécurité dans le cas d'un choc frontal.

Une telle commande doit être transmise à tous les actionneurs concernés, ce qui oblige l'unité centrale à répéter le message d'actionnement plusieurs fois avec des adresses différentes. Une telle solution ralentit le temps de réponse du système de sécurité.

Il a été proposé par certains constructeurs d'améliorer le temps de réponse en complétant l'adresse physique du composant par une adresse dite de groupe formée de 2 à 6 bits et qui permet d'affecter chaque composant à un groupe fonctionnel donné (par exemple actionneurs de protection pour choc frontal, choc latéral droit, choc latéral gauche, choc arrière....).

Ainsi un ordre peut être transmis au choix à l'adresse physique d'un composant donné ou bien à l'adresse d'un groupe donné de composants.

Une telle solution présente pour inconvénient qu'elle ne permet de gérer qu'un nombre réduit de composants et de groupes de composants.

En effet, chaque composant a concrètement deux adresses, une adresse physique et une adresse de groupe. Pour une longueur totale de message d'identification donnée on réduit donc les capacités d'adressage qui ne pourront en aucun cas dépasser celles permises par la longueur du mot correspondant à l'adresse physique du composant.

Ainsi pour une adresse de 8 bits comportant un mot d'adressage physique de 4 bits et un mot d'adressage de groupe de 4 bits, on ne pourra définir qu'un dispositif à 16 composants maximum alors qu'un mot de 8 bits permet théoriquement de générer 256 adresses.

Une évolution ultérieure du dispositif par l'adjonction de nouveaux composants, tels que d'autres actionneurs ou des capteurs sera rendue délicate par une telle architecture.

C'est le but de l'invention que de proposer un procédé d'identification et de commande de composants permettant de pallier de tels inconvénients.

Ainsi le procédé selon l'invention permet facilement de définir un dispositif de commande gérant par l'intermédiaire d'un BUS d'échange de données un grand nombre de composants tout en autorisant également la gestion d'un grand nombre de groupes de composants.

Le procédé selon l'invention permet facilement de faire évoluer un dispositif de commande donné en autorisant l'adjonction de nouveaux composants sans modifier l'architecture du BUS.

Ainsi l'invention a pour objet un procédé d'identification et de commande de composants d'un système, notamment d'un système de sécurité automobile, système comprenant une unité centrale de commande, un BUS de liaison et des composants tels que des initiateurs pyrotechniques et/ou des senseurs, procédé dans lequel chaque composant se voit attribuer une adresse numérique permettant les échanges de données à travers le BUS entre ledit composant et l'unité centrale ainsi que la commande du composant par l'unité centrale, procédé caractérisé en ce que l'adresse comprend un premier mot formé de N bits et permettant de définir ainsi au plus 2^{N} groupes de composants et un deuxième mot formé de P bits qui permet de définir P composants différents à l'intérieur de chaque groupe, chaque bit de ce deuxième mot correspondant ainsi à un composant particulier du groupe considéré, le deuxième mot permettant au choix d'identifier dans le groupe considéré un seul ou plusieurs composants.

Selon une caractéristique du procédé, le premier mot définissant le groupe de composants pourra être transmis avant le deuxième mot définissant un ou plusieurs composants particuliers du groupe considéré.

Selon une autre caractéristique, pour commander ou interroger simultanément plusieurs composants d'un groupe donné, on pourra envoyer dans le bus un message comprenant une seule adresse dont le premier mot correspond au groupe de composants visé et dont le deuxième mot est formé d'une succession de « 1 » et de « 0 », chaque état logique « 1 » correspondant à un composant particulier du groupe auquel s'adresse le message.

Le premier mot pourra comprendre au moins 4 bits, et avantageusement le premier mot comprendra 8 bits.

Le deuxième mot pourra comprendre au moins 4 bits et avantageusement le deuxième mot comprendra 8 bits.

L'invention a également pour objet un dispositif de commande mettant en oeuvre le procédé selon l'invention.

Le dispositif comprend une unité centrale de commande, un BUS de liaison et des composants tels que des initiateurs pyrotechniques et/ou des senseurs. Il est caractérisé en ce que l'unité de commande échange des données avec les composants au travers du BUS, chaque message de données comportant une adresse comprenant un premier mot formé de N bits et permettant de définir ainsi au plus 2^{N} groupes de composants et un deuxième mot formé de P bits qui permet de définir P composants différents à l'intérieur de chaque groupe, chaque bit de ce deuxième mot correspondant ainsi à un composant particulier du groupe considéré, le deuxième mot permettant au choix d'identifier dans le groupe considéré un seul ou plusieurs composants.

Le dispositif de commande selon l'invention pourra être intégré à un véhicule et les composants pourront comprendre au moins deux initiateurs pyrotechniques et au moins un senseur, par exemple de décélération ou de choc.

L'invention sera mieux comprise à la lecture de la description qui va suivre d'un mode particulier de réalisation, description faite en référence aux dessins annexés et dans lesquels :
- la figure 1 est un schéma d'ensemble d'un dispositif de sécurité mettant en oeuvre le procédé selon l'invention,
- les figures 2a et 2b schématisent la structure de messages mis en oeuvre par un dispositif selon l'invention, la figure 2a correspondant à un message de commande d'une action et la figure 2b correspondant à un message de transmission d'une information,
- la figure 3 schématise la structure d'une adresse d'identification de composant proposée par le procédé selon l'invention,
- la figure 4 schématise un autre exemple de structure d'adresse de composant,
- la figure 5 schématise un autre exemple de structure d'adresse de composant,
- la figure 6 est un exemple de signal mis en oeuvre par le procédé selon l'invention dans une application à un système de sécurité automobile,
- la figure 7 est un exemple d'un signal mis en oeuvre par le procédé selon l'invention dans une application à un système de sécurité automobile.

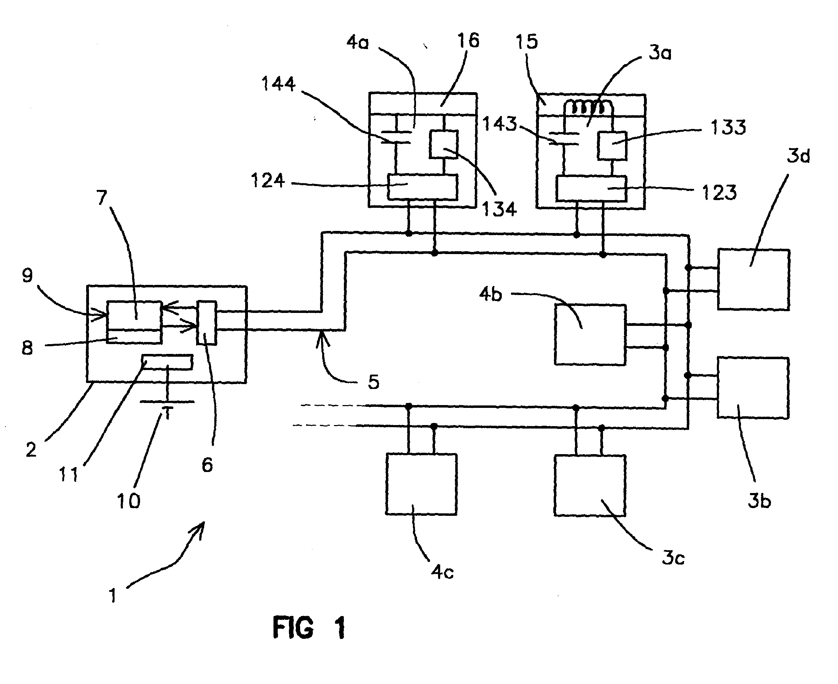

En se reportant à la figure 1, un dispositif de sécurité 1 pour véhicule comprend une unité centrale 2 de commande électronique qui est reliée, par l'intermédiaire d'un BUS 5 de transmission de données, à différents composants qui sont des actionneurs ou initiateurs pyrotechnique 3a, 3b, 3c, 3d ou bien des capteurs d'environnement 4a, 4b, 4c.

Les capteurs 4a, 4b, 4c sont par exemple des capteurs de choc (jauges de contraintes) ou de décélération. Ces capteurs comportent des moyens assurant la détection des variations d'une grandeur d'environnement, par exemple un accéléromètre ou un capteur de déformation.

Les initiateurs pyrotechniques sont destinés d'une façon classique à déclencher un moyen de protection (non représenté), par exemple un coussin gonflable, un prétensionneur de ceinture, un système assurant la rupture d'un pédalier ou encore le déploiement d'un pare choc...

L'unité de commande 2 comprend une interface entrée/sortie 6 qui assure la modulation et la démodulation des signaux échangés sur le BUS. Cette interface est reliée à un calculateur électronique intégré 7 qui assure le traitement des données reçues par le BUS et génère les signaux émis sur le BUS par l'unité de commande. Le calculateur est associé à différentes mémoires ou registres 8 qui contiennent les données de programmation assurant le fonctionnement du dispositif.

Le calculateur peut également recevoir par une entrée 9 une programmation externe notamment lors de l'initialisation du dispositif (première mise en place dans un véhicule) ou lors d'une modification du dispositif de sécurité (introduction d'autres initiateurs et/ou d'autres capteurs). Le calculateur pourra également être relié à un ou plusieurs systèmes de prédiction de choc.

L'unité de commande 2 est également reliée à une source d'énergie 10, par exemple la batterie du véhicule et elle comporte un circuit 11 de gestion de l'énergie qui fournit une alimentation stabilisée à l'unité de commande et assure également la fourniture (par l'intermédiaire du BUS 5) d'une tension d'alimentation aux différents initiateurs 3 et aux différents capteurs 4.

Les composants 3 et 4 ne sont pas décrits ici en détails.

Chaque composant comportera (comme schématisé sur le capteur 4a et l'initiateur 3a) une interface entrée/sortie 123 ou 124 assurant la modulation et la démodulation des signaux échangés sur le BUS 5. Cette interface assurera également la séparation entre les signaux et la puissance électrique transmis par l'intermédiaire du bus.

Les composants comporteront également chacun une unité de calcul 133 ou 134, comportant une ou plusieurs mémoires ou registres et une réserve d'énergie 143 ou 144, telle un condensateur.

L'unité de calcul 133 des initiateurs 3 permet de commander le déclenchement d'un inflammateur 15, par exemple un fil chaud ou bien un pont semi conducteur placé au contact d'une composition pyrotechnique (non représentée).

L'unité de calcul 134 des capteurs 4 permet de traiter les signaux fournis par un senseur 16 (intégrant de façon connue les circuits de conditionnement des signaux), par exemple un accéléromètre ou un capteur de déformation.

L'unité de calcul 134 permettra de détecter une variation d'un paramètre physique d'environnement (par exemple accélération) qui dépassera un certain seuil mis en mémoire.

Les mémoires sont également destinées à recevoir un code d'identification du composant avant ou lors de la mise en place de celui ci dans le dispositif 1.

La charge des réserves d'énergie 143,144 s'effectue lors de la mise sous tension du dispositif de sécurité 1. Après charge, les composants utilisent pour le fonctionnement normal de leurs circuits l'énergie qui est fournie par le BUS.

L'énergie stockée dans les réserves 143,144 est utilisée pour assurer l'initiation par décharge capacitive de l'inflammateur 15 ainsi que pour permettre le fonctionnement normal des circuits de l'initiateur 3 ou du capteur 4 en cas de rupture du BUS.

L'unité centrale de commande va échanger des messages avec les différents composants 3,4 au travers du BUS 5.

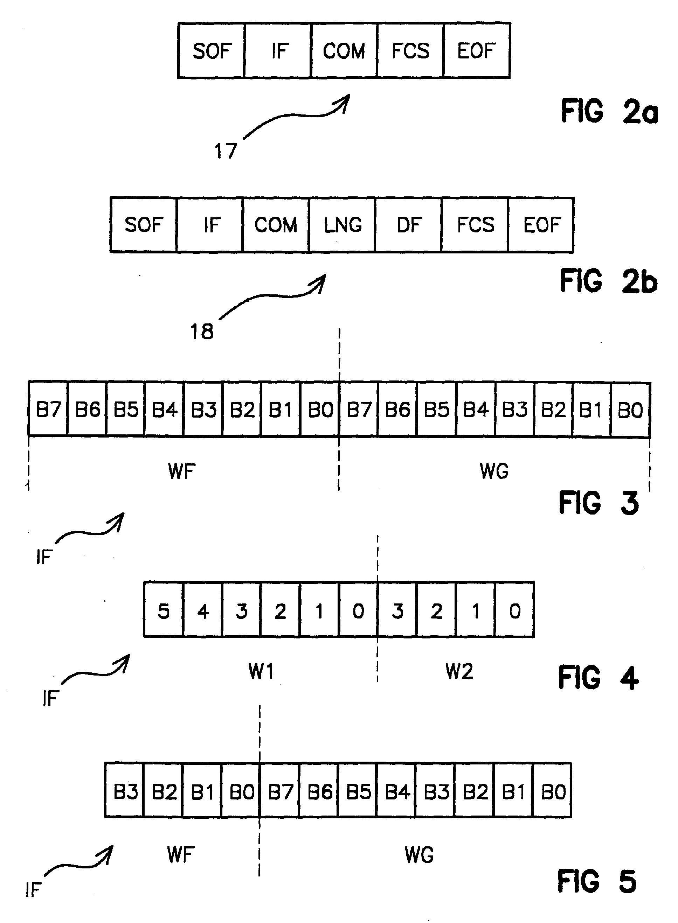

La figure 2a montre la structure d'un premier type 17 de message pouvant être échangé.

Ce message est un message de commande par exemple un message utilisé par l'unité de commande pour déclencher la mise à feu d'un ou plusieurs initiateurs ou pour demander à un ou plusieurs composants de transmettre une information de diagnostic de fonctionnement.

Le message 17 comprend une première partie SOF qui est un indicateur de début de message, habituellement composée de 2 bits, un 1 suivi d'un 0.

La deuxième partie IF du message 17 est l'identifiant (ou adresse) du composant ou du groupe de composant concerné par le message.

Cette partie sera décrite en détails par la suite.

La troisième partie COM est le champ de commande du message et qui contient l'ordre envoyé au composant ou au groupe de composants.

La quatrième partie FCS est un octet de contrôle d'erreur de transmission. D'une façon classique cet octet aura pour valeur la somme de tous les octets du message modulo 256 (non compris les octets FCS et EOF).

La cinquième partie EOF est un indicateur de fin de message. Il est constitué de deux bits, un 0 suivi d'un 1.

La figure 2b montre la structure d'un deuxième type 18 de message pouvant être échangé.

Ce message 18 est utilisé par exemple pour réaliser à partir de l'unité de commande 2 une programmation d'un composant du dispositif 1. Il est utilisé également par un composant 3 ou 4 du dispositif pour transmettre à l'unité centrale le résultat d'un diagnostic de fonctionnement.

Il diffère du premier type 17 en ce que le champ COM est suivi d'un champ LNG et d'un champ DF. Le champ DF correspond aux données transmises. La longueur du champ DF est variable et généralement inférieure ou égale à 16 octets. Le champ LNG permet de préciser la longueur du champ de données DF codée sur 4 bits.

La figure 3 montre la structure d'un identifiant IF (ou adresse) de composants selon l'invention.

Cet identifiant IF comprend un premier mot WF, ou mot fonction, formé de 8 bits et permettant de définir ainsi au plus 2⁸ (soit 256) groupes de composants. Chaque groupe pourra être associé à une fonction de protection. D'une façon pratique on exclura le mot constitué uniquement de 0 qui sera utilisé pour la programmation initiale de l'identifiant du composant. Il existera donc 255 fonctions possibles.

Le premier mot WF est suivi d'un deuxième mot WG, ou mot de groupage, formé lui aussi de 8 bits et qui permet à la fois d'identifier 8 composants différents à l'intérieur de chaque groupe et de regrouper plusieurs composants du même groupe.

Ainsi chaque composant du dispositif est doté d'une adresse unique IF qui est formée d'un mot WF précisant le groupe dans lequel se trouve le composant et d'un mot WG précisant le rang du composant dans le groupe considéré.

De part sa structure le mot WG permet de définir de façon unique chacun des 8 composants d'un groupe donné. Il permet également de définir divers regroupements de composants à l'intérieur du même groupe.

Le tableau ci dessous montre ainsi à titre d'exemples différentes formes du mot WG et leur signification :

| **Mot de groupage WG** | | | | | | | | **Composant(s) visé(s) dans le groupe WF considéré** |
|---|---|---|---|---|---|---|---|---|
| **B7** | **B6** | **B5** | **B4** | **B3** | **B2** | **B1** | **B0** | |
| 0 | 0 | 0 | 0 | 0 | 0 | 0 | 1 | Composant 1 |
| 0 | 0 | 0 | 0 | 0 | 0 | 1 | 0 | Composant 2 |
| 0 | 0 | 0 | 1 | 0 | 0 | 0 | 0 | Composant 5 |
| 0 | 1 | 0 | 0 | 0 | 0 | 1 | 0 | Composants 1 et 7 |
| 1 | 0 | 1 | 1 | 1 | 0 | 0 | 0 | Composants 4,5,6,8 |
| 1 | 1 | 1 | 1 | 1 | 1 | 1 | 1 | Tous les composants |
| 0 | 0 | 0 | 0 | 0 | 0 | 0 | 0 | Aucun composant |

Une taille de 8 caractères pour le mot WG permet de définir 2⁸=256 mots WG différents.

8 mots WG permettront de définir les 8 composants différents du groupe considéré (défini par le mot WF). Les autres'mots permettront de définir toutes les combinaisons possibles de ces 8 composants.

Ainsi par un seul mot WG il sera possible d'adresser un message à un ou plusieurs composants d'un groupe WF donné.

Le procédé selon l'invention permet donc de définir avec un identifiant ou adresse de 2 octets un dispositif comprenant 255 fonctions et 8 composants par fonction, soit un dispositif dans lequel peuvent se trouver 255 x 8 = 2040 composants.

Ce dispositif permet aisément de commander ou interroger simultanément tous les composants d'un groupe donné.

Avec un nombre d'octets réduits il devient donc possible de définir un dispositif comportant un nombre important de fonctions et de composants. Les évolutions ultérieures d'un dispositif par l'adjonction de nouveaux composants sont donc facilités.

Conformement à l'invention le mot WF sera transmis avant le mot WG. Une telle caractéristique permet d'assurer un éveil de tous les composants appartenant à un groupe donné avant avant même que l'adresse complète IF du ou des composants concernés soit transmise. Une telle disposition permet d'améliorer le temps de réponse.

A titre d'exemple comparatif la figure 4 montre un identifiant ou adresse IF formé d'un premier mot W1 de 6 bits suivi d'un deuxième mot W2 de 4 bits.

Si on met en oeuvre le procédé d'adressage tel que décrit dans l'art antérieur et dans lequel on donne à chaque composant une adresse physique et une adresse fonctionnelle distinctes. L'adresse physique sera donnée par le mot W1 à 6 bits et l'adresse fonctionnelle sera donnée par le mot W2 de 4 bits.

Il est alors possible avec ce procédé connu de définir 2⁶=64 composants distincts ainsi que 2⁴=16 fonctions distinctes.

Si on adopte le procédé d'identification selon l'invention et avec une longueur identique pour l'identifiant IF, il est possible de définir avec le mot W1 2⁶=64 fonctions distinctes et d'associer, par le mot W2, 4 composants à chaque fonction. On peut donc adresser 4 x 64 = 256 composants distincts.

Le procédé d'identification et de commande selon l'invention permet donc avec une même longueur de mot identifiant ou adresse IF d'adresser 4 fois plus de composants et de définir 4 fois plus de fonctions.

D'une façon générale pour un identifiant formé d'un mot d'adressage physique de N bits suivi d'un mot d'adressage fonctionnel de P bits, le procédé selon l'invention permet sans changer la longueur de l'identifiant d'adresser P fois plus de composants que ne le permettait le procédé connu et de définir 2^{(N-P)} fonctions de plus.

Le procédé selon l'invention permet donc de définir des dispositifs de commande comprenant d'avantage de composants ou ayant des capacités d'évolution supérieures, de nouveaux composants pouvant être facilement ajoutés au fil du temps.

A titre de variante, il est bien entendu possible en fonction des besoins ou des contraintes de faire varier le nombre de bits choisis pour le mot WF et le mot WG de l'identifiant IF. On préférera un identifiant ou adresse IF formé de 2 octets ce qui assure une réserve de 255 fonctions et 2040 composants.

La figure 5 montre à titre de variante un identifiant IF formé d'un mot fonction WF formé de 4 bits et permettant de définir ainsi au plus 2⁴ (soit 16) groupes de composants. Chaque groupe pourra être associé à une fonction de protection.

Ce mot WF est suivi d'un deuxième mot WG, ou mot de groupage qui est formé de 8 bits.

Un tel identifiant permet d'adresser 2⁴ x 8 = 128 composants répartis dans 16 groupes fonctionnels.

Les signaux échangés au travers du BUS 5 seront effectués en utilisant un protocole de dialogue approprié. On pourra par exemple utiliser un protocole half duplex asynchrone avec un codage des bits de données en largeur de créneaux.

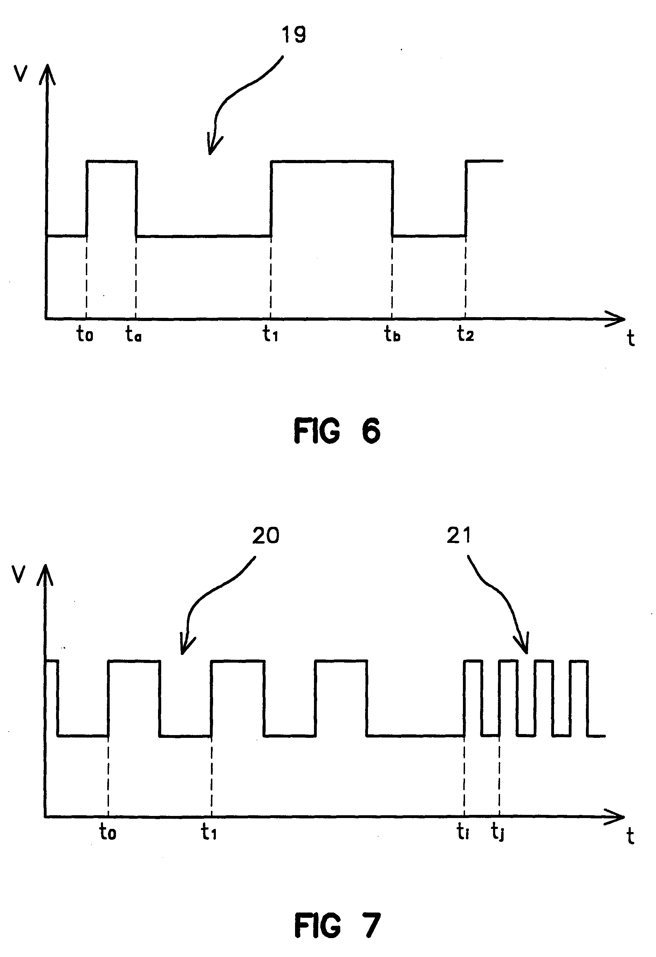

La figure 6 montre un exemple d'un tel codage bien connu de l'Homme du Métier. La courbe 19 dans un repère temps/tension présente la succession d'un état logique 0 et d'un état logique 1. L'état logique 0 se situe entre les instants t0 et t1. Il est caractérisé par une largeur du créneau (ta-t0) qui est strictement inférieure à la moitié de l'intervalle t1-t0. L'état logique 1 se situe entre les instants t1 et t2. Il est caractérisé par une largeur du créneau (tb-t1) qui est supérieure ou égale à la moitié de l'intervalle t2-t1.

t2-t1 est égal à t1-t0 et c'est la période fondamentale du signal transmis.

Les circuits électroniques de l'unité centrale et des composants (initiateurs et capteurs) sont capables de déchiffrer de tels signaux transmis le long du BUS 5 de façon à les transformer en une succession de mots binaires permettant de déclencher certaines actions.

La figure 7 montre un exemple de signal ainsi transmis. Une première partie 20 du signal est formée d'une succession de créneaux à une première fréquence F1. Elle est suivie par une deuxième partie 21 formée elle aussi par une succession de signaux mais à une deuxième fréquence F2 qui est supérieure à F1 (la période fondamentale du premier signal t1-t0 est supérieure à celle du second signal tj-ti).

Selon l'invention la première fréquence ou fréquence basse F1 est utilisée pour l'échange de données.

La deuxième fréquence (haute fréquence F2) est émise sur le BUS pour déclencher le déclenchement ou l'initiation d'un ou plusieurs initiateurs.

Le signal basse fréquence F1 est émis sur le BUS pour échanger les données entre l'unité centrale et les composants (initiateurs et capteurs). Il a même amplitude que celle des signaux de déclenchement de fréquence F2. Une telle disposition permet de simplifier l'électronique tant celle de l'unité centrale que celle incorporée dans les initiateurs et capteurs. Il n'est en effet pas alors nécessaire de prévoir des circuits d'interface capables de réduire ou élever le niveau de tension du signal (comme l'impose le dispositif décrit par EP834813). De plus l'utilisation d'un signal de déclenchement de niveau élevé permet d'alimenter de façon fiable un plus grand nombre d'initiateurs que ne le permet le dispositif décrit par EP834813 qui prévoit de diminuer le niveau du signal de déclenchement.

Le signal basse fréquence pourra être émis par l'unité centrale pour programmer un ou plusieurs composants.

Le signal basse fréquence pourra être également émis par l'unité centrale pour interroger les composants sur l'état de leur programmation, et/ou celui de leur réserve d'énergie et/ou sur les résultats d'au moins un test de fonctionnement.

Il sera également émis par les différents composants pour répondre aux interrogations faites par l'unité centrale.

La différence de fréquence entre les signaux de déclenchement et le signal d'échange de données permet aux différents circuits électroniques du dispositif de reconnaître immédiatement l'apparition d'un signal de déclenchement (haute fréquence F2). Les circuits électroniques seront conçus pour que les signaux haute fréquence (déclenchement) aient priorité sur les signaux d'échange. Un capteur ou initiateur reconnaissant un signal de déclenchement interrompra ses échanges de données et se mettra en état de réception. Le ou les initiateurs visés par un signal de déclenchement se reconnaîtront par la lecture de leur code d'identification inscrit dans le message transmis à haute fréquence.

A titre d'exemple on pourra utiliser une fréquence de 250 kbits/seconde pour les signaux de déclenchement et une fréquence de 15 kbits/seconde pour le signal d'échange de données.

Les messages échangés suivant l'une ou l'autre fréquence utiliseront un protocole d'échange approprié.

Les message auront l'une ou l'autre des formes décrites précédemment en référence aux figures 2a et 2b.

Diverses variantes sont bien entendu possibles sans sortir du cadre de l'invention.

Il est ainsi possible de faire varier le protocole d'échanges de données: interrogations en tension - réponses en courant, échanges full duplex, codage des créneaux de nature différente, type.

Le procédé selon l'invention peut être mis en oeuvre dans d'autres dispositifs que les dispositifs de sécurité pour véhicules automobiles. On pourra par exemple mettre en oeuvre le procédé selon l'invention pour les systèmes de déclenchement de charges explosives utilisées dans les carrières ou la démolition. Ou encore dans les systèmes utilisés dans le domaine de l'armement ou aéronautique et spatial ou encore pour la commande de feux d'artifices.

## Revendications

1. Procédé d'identification et de commande de composants d'un système, notamment d'un système de sécurité automobile, système comprenant une unité centrale de commande (2), un BUS de liaison (5) et des composants (3,4) tels que des initiateurs pyrotechniques et/ou des senseurs, procédé dans lequel chaque composant (3,4) se voit attribuer une adresse numérique (IF) permettant les échanges de données à travers le BUS (5) entre ledit composant et l'unité centrale (2) ainsi que la commande du composant par l'unité centrale, procédé ***caractérisé en ce que*** l'adresse (IF) comprend un premier mot (WF) formé de N bits et permettant de définir ainsi au plus 2^{N} groupes de composants (3,4) et un deuxième mot (WG) formé de P bits qui permet de définir P composants différents à l'intérieur de chaque groupe, chaque bit de ce deuxième mot (WG) correspondant ainsi à un composant particulier du groupe considéré, le deuxième mot permettant au choix d'identifier dans le groupe considéré un seul ou plusieurs composants.

2. Procédé d'identification et de commande de composants selon la revendication 1, caractérisé en ce que le premier mot (WF) définissant le groupe de composants est transmis avant le deuxième mot (WG) définissant un ou plusieurs composants particuliers du groupe considéré.

3. Procédé d'identification et de commande de composants selon une des revendications 1 ou 2, caractérisé en ce que, pour commander ou interroger simultanément plusieurs composants (3,4) d'un groupe donné, on envoie dans le bus un message comprenant une seule adresse (IF) dont le premier mot (WF) correspond au groupe de composants visé et dont le deuxième mot (WG) est formé d'une succession de « 1 » et de « 0 », chaque état logique « 1 » correspondant à un composant particulier du groupe auquel s'adresse le message.

4. Procédé d'identification et de commande de composants selon une des revendications 1 à 3, caractérisé en ce que le premier mot comprend au moins 4 bits.

5. Procédé d'identification et de commande de composants selon la revendication 4, caractérisé en ce que le premier mot comprend 8 bits.

6. Procédé d'identification et de commande de composants selon une des revendications 1 à 4, caractérisé en ce que le deuxième mot comprend au moins 4 bits.

7. Procédé d'identification et de commande de composants selon la revendication 6, caractérisé en ce que le deuxième mot comprend 8 bits.

8. Dispositif de commande de composants (3,4) mettant en oeuvre le procédé selon une des revendications précédentes, dispositif comprenant une unité centrale de commande (2), un BUS de liaison (5) et des composants (3,4) tels que des initiateurs pyrotechniques et/ou des senseurs, dispositif caractérisé en ce que l'unité de commande (2) échange des données avec les composants (3,4) au travers du BUS (5), chaque message de données comportant une adresse (IF) comprenant un premier mot (WF) formé de N bits et permettant de définir ainsi au plus 2^{N} groupes de composants et un deuxième mot (WG) formé de P bits qui permet de définir P composants différents à l'intérieur de chaque groupe, chaque bit de ce deuxième mot correspondant ainsi à un composant particulier du groupe considéré, le deuxième mot permettant au choix d'identifier dans le groupe considéré un seul ou plusieurs composants.

9. Dispositif de commande selon la revendication 8, caractérisé en ce qu'il est intégré à un véhicule et en ce que les composants comprennent au moins deux initiateurs pyrotechniques et au moins un senseur, par exemple de décélération ou de choc.
